# EUROPEAN PATENT APPLICATION

(11) **EP 2 244 265 A1**
(43) Date of publication of application: **27.10.2010**
(21) Application number: 10160738.0
(22) Date of filing: 22.04.2010
(51) Int. Cl.: G11B 27/10, G11B 27/34, H04N 5/445, H04N 5/44

(54) **Method for reproducing images recorded on an optical disc and optical disc apparatus**

(30) Priority: 22.04.2009 JP 2009104302
(71) Applicant: Funai Electric Co., Ltd., Daito-shi, Osaka 574-0013 (JP)
(72) Inventor: Takaki, Kentaro, Daito-shi Osaka 574-0013 (JP)
(74) Representative: Grünecker, Kinkeldey, Stockmair & Schwanhäusser Anwaltssozietät

(57) **Abstract**

An optical disc apparatus comprising a GUI processor that displays an image indicating how a remote control has been operated by a user and an image indicating the type of a reproduction process started by a reproduction controller in accordance with an operation signal output from the remote control and a process signal output from the reproduction controller. When a user has operated the remote control, the GUI processor displays an image indicating how the remote control has been operated by the user in accordance with an operation signal output from the remote control. Subsequently, when the reproduction controller has started a reproduction process, the GUI processor displays an image indicating the type of the reproduction process started by the reproduction controller in accordance with a process signal output from the reproduction controller.

## Description

### BACKGROUND OF THE INVENTION

### 1. Field of the Invention

The present invention relates to a method for reproducing images recorded on an optical disc and an optical disc apparatus that reproduces images recorded on an optical disc.

### 2. Description of the Related Art

Conventionally, optical disc apparatus execute a title search process, a button selection search process, a chapter search process, and so on as processes for reproducing images based on image data recorded on an optical disc, in accordance with a user operation on operation means and control data recorded on the optical disc. Some of the optical disc apparatus use a graphical user interface (GUI) to inform a user of how the operation means has been operated and what operation is being performed by the optical disc apparatus by displaying images indicating them.

In such an optical disc apparatus, the processes for reproducing images based on image data recorded on an optical disc are executed under the control of a reproduction controller while the GUI is controlled by a GUI processor. When a user has operated the operation means, the operation means outputs an operation signal indicating how the operation means has been operated by the user. In accordance with the operation signal output from the operation means (i.e., information on how the operation means has been operated by the user) and control data recorded on the optical disc, the reproduction controller executes a process for reproducing images based on image data recorded on the optical disc. Further, when the reproduction controller has started the reproduction process, it outputs a process signal indicating the type of the reproduction process. Then, in accordance with the process signal output from the reproduction controller, the GUI processor displays the GUI (i.e., displays images indicating how the operation means has been operated by the user and what type of reproduction process has been started by the reproduction controller).

Meanwhile, Japanese Laid-open Patent Publication No. HEI 11-238367 discloses an optical disc apparatus designed to inform a user of keys that can be operated at the time among various operation keys. Japanese Patent No. 3826039 discloses a signal processing apparatus that can set a procedure for reproduction of image signals recorded on a recording medium by a user operating a remote control. Japanese Laid-open Patent Publication No. 2005-12525 discloses an image recording/reproduction apparatus that searches for a category when a remote control is operated, and displays recorded file titles with the name of the category on the screen. Japanese Laid-open Patent Publication No. 2005-92997 discloses an image reproduction apparatus that displays an error mark on the screen when a key operation on the remote control is inhibited one or when information selected by a key operation does not exist. Further, Japanese Utility Model No. 3017642 discloses a VCR that allows a user to select one of a number of operational states displayed on the screen and operates in the selected state.

What kind of reproduction process is executed in response to a user operation on the operation means is set in advance according to the type of optical discs and the type of contents. Thus, it may vary depending on the type of optical discs and the type of contents. Therefore, even if a user operates the operation means in the same manner, the reproduction controller may execute different processes, as reproduction processes, depending on the type of optical discs and the type of contents.

Further, as described above, the GUI processor displays a GUI in accordance with a process signal output from the reproduction controller when the reproduction controller has started a reproduction process (i.e., a signal indicating the type of the reproduction process). More particularly, the GUI processor cannot recognize the type of the reproduction process before the process signal is output from the reproduction controller (i.e., before the reproduction controller starts the reproduction process). After the process signal has been output from the reproduction controller (i.e., after the reproduction controller has started the reproduction process), the GUI processor can recognize the type of the reproduction process based on the process signal output from the reproduction controller. Accordingly, after the reproduction controller has started reproduction processes, the GUI processor displays different GUIs depending on the types of the started reproduction processes.

Thus, even if a user operates the operation means in the same manner, the conventional optical disc apparatus may execute different reproduction processes and display different GUIs. This may cause a user to feel uncomfortable. Even if the techniques disclosed in the above mentioned patent documents are applied, the above described problem cannot be solved.

### SUMMARY OF THE INVENTION

An object of the present invention is to provide a method for reproducing images recorded on an optical disc and an optical disc apparatus capable of achieving a GUI that does not make a user feel uncomfortable and thus is user-friendly.

According to a first (method) aspect of the present invention, said objective is performed by the features of claim 1. Preferred embodiments of said method are laid down in the related subclaims 2 to 9.

Thus, there is provided a method for reproducing images recorded on an optical disk, wherein operation related images are displayed in conjunction with recorded content or no content-related images providing a feedback to the operator on the reproduction process initiated by the operator.

Preferably, in addition to a display of a recorded content related or no content-related image, a first image indicating how a remote control is being operated by a user and a second image indicating the type of a reproduction process started in response to a user operation of an operation means, in particular a remote control, are displayed.

Further, preferably the first and second images are displayed in a similar way, in particular as digits, so as to establish a common and unified graphical user interface.

Still further preferably when a user has operated an operation means, a GUI processor displays a first image indicating how the operation means has been operated by the user in accordance with the operation signal output from the operation means and, subsequently, when a reproduction control means has started a reproduction process, a GUI processor displays an image indicating the type of the reproduction process started by the reproduction control means in accordance with a process signal output from the reproduction control means.

Preferably, while the GUI processor is displaying the image indicating the type of the reproduction process started by the reproduction control means, the GUI processor continues to display the image indicating how the operation means has been operated.

Further, preferably when a user has entered a number via the operation means, the GUI processor displays the entered number as an image indicating how the operation means has been operated, subsequently, when a user has confirmed the entry of the number via the operation means and when the reproduction control means has started a reproduction process corresponding to the confirmed number, the GUI processor displays an image indicating type of the reproduction process started by the reproduction control means.

Still further preferably, a reproduction control means selectively executes a title search process, a button selection search process, and a chapter search process as reproduction processes.

More preferably, the title search process is processed for, when a user has entered a number and has confirmed the entry of the number via the operation means, reproducing images in a title corresponding to the confirmed number, wherein the button selection search process is a process for, when a user has entered a number and has confirmed the entry of the number via the operation means, reproducing images based on the image data from a point corresponding to the confirmed number, wherein the chapter search process is a process for, when a user has entered a number and has confirmed the entry of the number via the operation means, reproducing images in a chapter corresponding to the confirmed number.

Preferably, the reproduction control means selectively executes a title search process, a button selection search process, and a chapter search process as reproduction processes, wherein the title search process is a process for, when a user has entered a number and has confirmed the entry of the number via the operation means, reproducing images in a title corresponding to the confirmed number, wherein the button selection search process is a process for, when a user has entered a number and has confirmed the entry of the number via the operation means, reproducing images based on the image data from a point corresponding to the confirmed number, wherein the chapter search process is a process for, when a user has entered a number and has confirmed the entry of the number via the operation means, reproducing images in a chapter corresponding to the confirmed number, wherein, when the reproduction control means has started the title search process as an reproduction process, the GUI processor displays an image indicating that the title search process has been started as an image indicating type of the reproduction process started by the reproduction control means, wherein, when the reproduction control means has started the button selection search process as an reproduction process, the GUI processor displays an image indicating that the button selection search process has been started as an image indicating type of the reproduction process started by the reproduction control means, and wherein, when the reproduction control means has started the chapter search process as a reproduction process, the GUI processor displays an image indicating that the chapter search process has been started as an image indicating type of the reproduction process started by the reproduction control means.

According to a second (apparatus) aspect of the present invention, said objective is performed by the features of claim 10. Preferred embodiments are laid down in claims 11 and 12.

Thus, the optical disc apparatus comprises an operation means that is operated by a user in order to instruct the optical disc apparatus to perform an operation and outputs an operation signal indicating how the operation means has been operated; reproduction control means that executes a reproduction process for images based on image data recorded on an optical disc in accordance with the operation signal output from the operation means and control data recorded on the optical disc and that, when the reproduction process has been started, outputs a process signal indicating type of the reproduction process; and a GUI processor that displays a first image indicating how the operation means has been operated by a user and a second image indicating the type of the reproduction process started by the reproduction control means in accordance with the operation signal output from the operation means and the process signal output from the reproduction control means.

Preferably, it comprises a remote control receiver adapted to receive signals from an operation means, i.e. a remote control, a reproduction controller as the reproduction control means, a GUI processor, and an OSD processor which is adapted to communicate with a display for displaying images based on image data recorded on an optical disc and user operation related image data generated by a GUI processor to display same as a graphical user interface.

Further, preferably, the reproduction controller causes the optical disc drive to read recorded data from an optical disc to generate image signals to display images based on image data recorded on said optical disc and outputting said image signals, the GUI processor is adapted to generate image signals to display a graphical user interface and outputs the image signals, the OSD processor is adapted to perform a process of superimposing the image signals output from the GUI processor on the image signals output from the reproduction controller and to send the processed image signals to the display device.

The present invention encompasses an optical disc apparatus comprising: operation means that is operated by a user in order to instruct the optical disc apparatus to perform an operation and outputs an operation signal indicating how the operation means has been operated; reproduction control means that executes a reproduction process for images based on image data recorded on an optical disc in accordance with the operation signal output from the operation means and control data recorded on the optical disc and that, when the reproduction process has been started, outputs a process signal indicating type of the reproduction process; and a GUI processor that displays an image indicating how the operation means has been operated by a user and an image indicating the type of the reproduction process started by the reproduction control means in accordance with the operation signal output from the operation means and the process signal output from the reproduction control means.

When a user has operated the operation means, the GUI processor displays an image indicating how the operation means has been operated by the user in accordance with an operation signal output from the operation means.

Subsequently, when the reproduction control means has started a reproduction process, the GUI processor displays an image indicating type of the reproduction process started by the reproduction control means in accordance with a process signal output from the reproduction control means.

According to the optical disc apparatus configured as described above, regardless of differences in the types of optical discs and the types of contents, an image indicating how the operation means has been operated by a user and an image indicating the type of a reproduction process started in response to the user operation on the operation means are displayed in a similar way to provide a common and unified GUI. Accordingly, a GUI that does not make a user feel uncomfortable and thus is user-friendly can be achieved.

Preferably, while the GUI processor is displaying the image indicating the type of the reproduction process started by the reproduction control means, the GUI processor continues to display the image indicating how the operation means has been operated.

In one embodiment, when a user has entered a number via the operation means, the GUI processor displays the entered number as an image indicating how the operation means has been operated, and subsequently, when a user has confirmed the entry of the number via the operation means and when the reproduction control means has started a reproduction process corresponding to the confirmed number, the GUI processor displays an image indicating type of the reproduction process started by the reproduction control means.

In one embodiment, the reproduction control means selectively executes a title search process, a button selection search process, and a chapter search process as reproduction processes, and, when the reproduction control means has started the title search process as an reproduction process, the GUI processor displays an image indicating that the title search process has been started as an image indicating type of the reproduction process started by the reproduction control means, when the reproduction control means has started the button selection search process as an reproduction process, the GUI processor displays an image indicating that the button selection search process has been started as an image indicating type of the reproduction process started by the reproduction control means, and when the reproduction control means has started the chapter search process as a reproduction process, the GUI processor displays an image indicating that the chapter search process has been started as an image indicating type of the reproduction process started by the reproduction control means.

The above described title search process is a process for, when a user has entered a number and has confirmed the entry of the number via the operation means, reproducing images in a title corresponding to the confirmed number, the above described button selection search process is a process for, when a user has entered a number and has confirmed the entry of the number via the operation means, reproducing images based on the image data from a point corresponding to the confirmed number, and the above described chapter search process is a process for, when a user has entered a number and has confirmed the entry of the number via the operation means, reproducing images in a chapter corresponding to the confirmed number.

While the novel features of the present invention are set forth in the appended claims, the present invention will be better understood from the following detailed description taken in conjunction with the drawings.

### BRIEF DESCRIPTION OF THE DRAWINGS

The present invention will be described hereinafter with reference to the annexed drawings. It is to be noted that all the drawings are shown for the purpose of illustrating the technical concept of the present invention or embodiments thereof, wherein:
FIG. 1 is an electrical block diagram showing the configuration of an optical disc apparatus according to one embodiment of the present invention;
FIG. 2 is a flowchart showing a process for displaying a GUI in the optical disc apparatus;
FIG. 3 shows an example of GUI display at the time of a title search process in the optical disc apparatus;
FIG. 4 shows an example of GUI display at the time of a button selection search process in the optical disc apparatus; and
FIG. 5 shows an example of GUI display at the time of a chapter search process in the optical disc apparatus.

### DESCRIPTION OF THE PREFERRED EMBODIMENTS

Referring now to the accompanying drawings, an optical disc apparatus embodying the present invention is described. It is to be noted that the following description of preferred embodiment of the present invention has been presented for purposes of illustration and description, and is not intended to be exhaustive or to limit the present invention to the precise form disclosed.

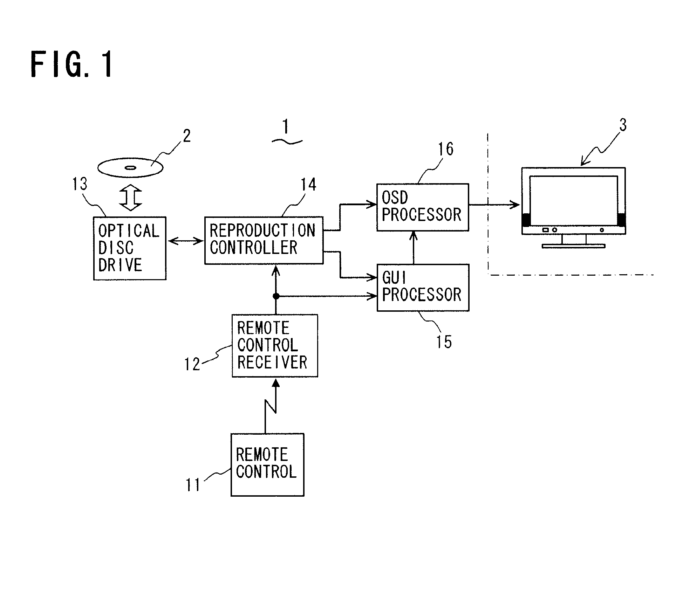

FIG. 1 shows the configuration of the optical disc apparatus according to this embodiment. The optical disc apparatus 1 is an apparatus that reproduces images from an optical disc 2. The optical disc apparatus 1 is used with a display 3 connected thereto, and reproduces images from the optical disc 2 by displaying on the display 3 images based on image data recorded on the optical disc 2.

The optical disc apparatus 1 comprises a remote control (operation means) 11, a remote control receiver 12, an optical disc drive 13, a reproduction controller (reproduction control means) 14, a GUI processor 15, an OSD processor 16, and so on.

The remote control 11 is operated by a user in order to instruct the optical disc apparatus 1 to perform various operations. The remote control 11 has various operation keys which are operated by a user in order to instruct the optical disc apparatus 1 to perform various operations. When the various operation keys are operated by a user, the remote control 11 outputs an operation signal indicating how the remote control 11 has been operated, as a wireless signal. The remote control receiver 12 receives the operation signal output as the wireless signal from the remote control 11, and outputs the operation signal indicating how the remote control 11 has been operated, as an electrical signal.

The optical disc 2 is placed in/removed from the optical disc drive 13. Under the control of the reproduction controller 14, the optical disc drive 13 reads recorded data (various kinds of data such as management data, control data, image data recorded on the optical disc 2) from the optical disc 2 placed therein and outputs the recorded data read from the optical disc 2.

The reproduction controller 14 causes the optical disc drive 13 to read recorded data from the optical disc 2. Based on the recorded data read from the optical disc 2, which is output from the optical disc drive 13, the reproduction controller 14 generates image signals to display images based on image data recorded on the optical disc 2, and outputs the image signals.

The GUI processor 15 generates image signals to display a graphical user interface (GUI) and outputs the image signals. The OSD processor 16 performs the process of superimposing the image signals output from the GUI processor 15 on the image signals output from the reproduction controller 14, and sends the processed image signals to the display 3.

When image signals output from the reproduction controller 14 are sent to the display 3 after processed by the OSD processor 16, images based on image data recorded on the optical disc 2 are displayed on the display 3. More particularly, the reproduction controller 14 executes a process for reproducing images based on image data recorded on the optical disc 2 by causing the optical disc drive 13 to read recorded data from the optical disc 2 and outputting image signals to display the images based on the image data recorded on the optical disc 2.

Further, when image signals output from the GUI processor 15 are sent to the display 3 after processed by the OSD processor 16, the GUI is displayed on screen (i.e., superimposed on images based on image data recorded on the optical disc 2) on the display 3. More particularly, the GUI processor 15 executes a process for displaying the GUI by generating image signals to display the GUI and outputting the generated image signals.

In accordance with an operation signal output from the remote control receiver 12 (i.e., an operation signal output from the remote control 11) as well as control data recorded on the optical disc 2, the reproduction controller 14 executes a process for reproducing images based on image data recorded on the optical disc 2. Further, when the reproduction controller 14 has started a reproduction process, the reproduction controller 14 outputs a process signal indicating the type of the reproduction process. As reproduction processes, the reproduction controller 14 selectively executes a title search process, a button selection search process, and a chapter search process.

In accordance with an operation signal output from the remote control receiver 12 (i.e., an operation signal output from the remote control 11) as well as a process signal output from the reproduction controller 14, the GUI processor 15 executes a process for displaying the GUI. As the GUI, the GUI processor 15 displays an image indicating how the remote control 11 has been operated by a user and an image indicating the type of a reproduction process started by the reproduction controller 14.

The content of the optical disc 2 (images based on image data recorded on the optical disc 2) and the reproduction processes executed by the reproduction controller 14 are now described. The content of the optical disc 2 has one or more titles, each of which has one or more chapters. Further, titles include "titles with buttons" and "titles without buttons".

"Titles with buttons" mean titles in which one or more buttons are displayed as parts of a reproduced image on the reproduced image all the time or at a given time while the content is being reproduced. Buttons in the "titles with buttons" are displayed to be selected by a user, and are associated with skip destinations in the content. More particularly, buttons in the "titles with buttons" are displayed so that a user can select the buttons to skip to specific points in the content.

More particularly, a "title with buttons" is a title that allows a user to, while the content is being reproduced, select a button displayed as part of reproduced images so as to skip to a specific point in the content, i.e., to a skip destination associated with the selected button. A number is shown in the button displayed as part of reproduced images. By entering the number via the remote control 11, a user can select the button displayed as part of reproduced images. The association between buttons displayed as part of reproduced images and skip destinations is described by control data recorded on the optical disc 2.

A "title without buttons" is a title that does not cause the display of buttons as described with respect to a "title with buttons" (buttons for a user to select in order to skip to a specific point in the content being reproduced).

Depending on whether or not content is being reproduced, and, when content is being reproduced, depending on whether the content being reproduced is a "title with buttons" or a "title without buttons", the reproduction controller 14 executes one of the title search process, the button selection search process, and the chapter search process as a reproduction process for images based on image data recorded on the optical disc 2.

The title search process is a process for, in response to the selection of a title by a user, searching for the selected title to reproduce images in the title. A user selects a title by entering a number via the remote control 11. Numbers to be entered for the selection of titles have one or two digits.

More particularly, the title search process is a process for, when a user has entered a one or two digit number and has confirmed the entry of the number via the remote control 11, reproducing images in a title corresponding to the confirmed number.

This title search process is executed when no content is being reproduced (reproduction of content has been stopped). Further, this title search process is executed commonly for all of HDMV contents on BD-VIDEO media, BD-J contents on BD-VIDEO media, and contents on media other than BD-VIDEO media such as BD/DVD/BD-AV/DVD-VR/AVCHD /AVCREC. The reproduction controller 14 executes the title search process when no content is being reproduced and when a user enters a number and then confirms the entry of the number via the remote control 11.

The button selection search process is a process for, when a user has selected a button displayed as part of reproduced images during reproduction of images in a "title with buttons", skipping to a point associated with the selected button so as to reproduce the content from the point. A user can select a button by entering a number via the remote control 11. Numbers to be entered for selection of buttons have one or two digits.

More particularly, the button selection search process is a process for, when a user has entered a number and has confirmed the entry of the number via the remote control 11, reproducing the content from a point corresponding to the confirmed number.

This button selection search process is executed when images in a "title with buttons" are being reproduced. Further, this button selection search process is executed commonly for contents other than BD-J contents (HDMV contents on BD-VIDEO media, and contents on media other than BD-VIDEO media such as BD/DVD/BD-AV/DVD-VR/AVCH D/AVCREC). More particularly, the reproduction controller 14 executes the button selection search process when images in a "title with buttons" of content other than BD-J contents are being reproduced and when a user enters a number and confirms the entry of the number via the remote control 11.

The chapter search process is a process for, in response to the selection of a chapter by a user during reproduction of images in a "title without buttons", searching for the selected chapter to reproduce images in the chapter. A user can select a chapter by entering a number via the remote control 11. Numbers to be entered for selection of a chapter have one or two digits.

More particularly, the chapter search process is a process for, when a user has entered a number and has confirmed the entry of the number via the remote control 11, reproducing images in the chapter corresponding to the confirmed number.

This chapter search process is executed when images in a "title without buttons" are being reproduced. Further, this chapter search process is executed commonly for contents other than BD-J contents. More particularly, the reproduction controller 14 executes the chapter search process when images in a "title without buttons" of content other than BD-J contents are being reproduced and when a user enters a number and confirms the entry of the number via the remote control 11.

When BD-J content is being reproduced, all of numbers to be entered for requesting a process are one digit numbers. Thus, once one digit number is entered, the entry is regarded as being confirmed. More particularly, when a user has entered one digit number via the remote control 11 during reproduction of BD-J content, the reproduction controller 14 executes a process corresponding to the entered number. At this time, the reproduction controller 14 executes the process corresponding to the entered number within 0.5 seconds after the entry of the one digit number.

How the GUI processor 15 executes the process for displaying the GUI is now described. When a user operates the remote control 11, the GUI processor 15 first displays an image indicating how the remote control 11 has been operated by the user in accordance with an operation signal output from the remote control 11. Subsequently, when the reproduction controller 14 has started a reproduction process (reproduction process executed in accordance with an operation signal output from the remote control 11), the GUI processor 15 displays an image indicating the type of the reproduction process started by the reproduction controller 14 in accordance with a process signal output from the reproduction controller 14.

More particularly, when a user has entered a number via the remote control 11, the GUI processor 15 displays the entered number as an image indicating how the remote control 11 has been operated. Subsequently, when the user has confirmed the entry of the number via the remote control 11 and then the reproduction controller 14 has started a reproduction process corresponding to the confirmed number, the GUI processor 15 displays the image indicating the type of the reproduction process started by the reproduction controller 14. At this time, the GUI processor 15 continues to display the image indicating how the remote control 11 has been operated while displaying the image indicating the type of the reproduction process started by the reproduction controller 14.

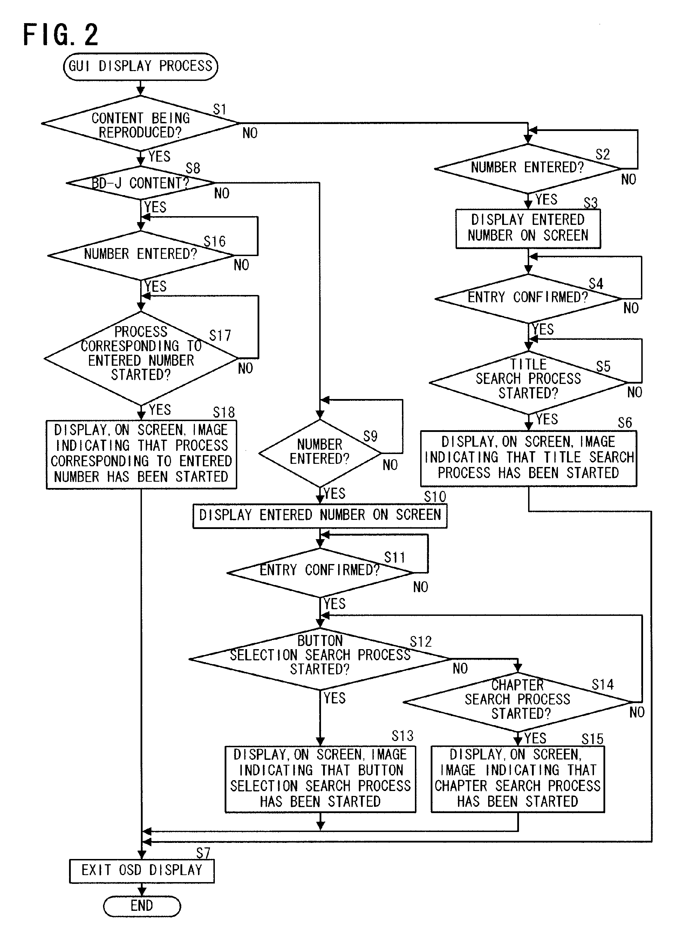

FIG. 2 is a flowchart showing how the GUI processor 15 executes the process for displaying the GUI. First, when no content is being reproduced (NO at S1) and when a user has entered a number via the remote control 11 (YES at S2), the GUI processor 15 displays, on the screen of the display 3, the entered number as an image indicating how the remote control 11 has been operated in accordance with an operation signal output from the remote control 11 (signal indicating the entered number) (S3).

Subsequently, when the user has confirmed the entry of the number via the remote control 11 (YES at S4), the reproduction controller 14 executes the title search process as a reproduction process in accordance with an operation signal output from the remote control 11 (signal indicating that the entry of the number has been confirmed).

When the reproduction controller 14 has started the title search process as the reproduction process (YES at S5), the GUI processor 15 displays on the screen of the display 3 an image showing that the title search process has been started, as an image indicating the type of the reproduction process started by the reproduction controller 14, in accordance with a process signal output from the reproduction controller 14 (signal indicating that the title search process has been started) (S6).

When the reproduction controller 14 has started the title search process, it outputs a content type signal indicating whether or not the content for which the title search process has been started is BD-J content. The GUI processor 15 stores the content type signal. Then, based on the content type signal stored, the GUI processor 15 determines whether or not the content being reproduced is BD-J content.

After a certain period of time has passed, the GUI processor 15 exits the OSD displays at the steps S3 and S6 (S7). More particularly, after the elapse of a certain period of time, the GUI processor 15 exits the display of the number entered by the user via the remote control 11 and the display of the image indicating that the title search process has been started.

On the other hand, when content other than BD-J content is being reproduced (YES at S1, NO at S8), and when a user has entered a number via the remote control 11 (YES at S9), the GUI processor 15 displays on the screen of the display 3 the entered number, as an image indicating how the remote control 11 has been operated, in accordance with an operation signal output from the remote control 11 (signal indicating the entered number) (S10).

Subsequently, when the user has confirmed the entry of the number via the remote control 11 (YES at S11), the reproduction controller 14 executes either the button selection search process or the chapter search process, as a reproduction process, in accordance with an operation signal output from the remote control 11 (signal indicating that the entry of the number has been confirmed). More particularly, if the content being reproduced is a "title with buttons", the button selection search process is executed. On the other hand, if the content being reproduced is a "title without buttons", the chapter search process is executed.

When the reproduction controller 14 has started the button selection search process as the reproduction process (YES at S12), the GUI processor 15 displays on the screen of the display 3 an image indicating that the button selection search process has been started, as an image indicating the type of the reproduction process started by the reproduction controller 14, in accordance with a process signal output from the reproduction controller 14 (signal indicating that the button selection search process has been started) (S13).

After a certain period of time has passed, the GUI processor 15 exits the OSD displays at the steps S10 and S13 (S7). More particularly, after the elapse of a certain period of time, the GUI processor 15 exits the display of the number entered by the user via the remote control 11 and the display of the image indicating that the button selection search process has been started.

On the other hand, when the reproduction controller 14 has started the chapter search process as the reproduction process (YES at S14), the GUI processor 15 displays on the screen of the display 3 an image indicating that the chapter search process has been started, as the image indicating the type of the reproduction process started by the reproduction controller 14, in accordance with a process signal output from the reproduction controller 14 (signal indicating that the chapter search process has been started) (S15).

After a certain period of time has passed, the GUI processor 15 exits the OSD displays at the steps S10 and S15 (S7). More particularly, after the elapse of a certain period of time, the GUI processor 15 exits the display of the number entered by the user via the remote control 11 and the display of the image indicating that the chapter search process has been started.

In another case where BD-J content is being reproduced (YES at S1, YES at S8), and where a user has entered a number via the remote control 11 (YES at S16), the reproduction controller 14 executes a process corresponding to the entered number within 0.5 seconds in accordance with an operation signal output from the remote control 11 (signal indicating the entered number).

When the reproduction controller 14 has started the process corresponding to the entered number (YES at S17), the GUI processor 15 displays on the screen of the display 3 an image indicating that the process corresponding to the entered number has been started, as an image indicating the type of the reproduction process started by the reproduction controller 14, in accordance with a process signal output from the reproduction controller 14 (S18).

After a certain period of time has passed, the GUI processor 15 exits the OSD display at the step S18 (S7). More particularly, after the elapse of a certain period of time, the GUI processor 15 exits the display of the image indicating that the process corresponding to the entered number has been started.

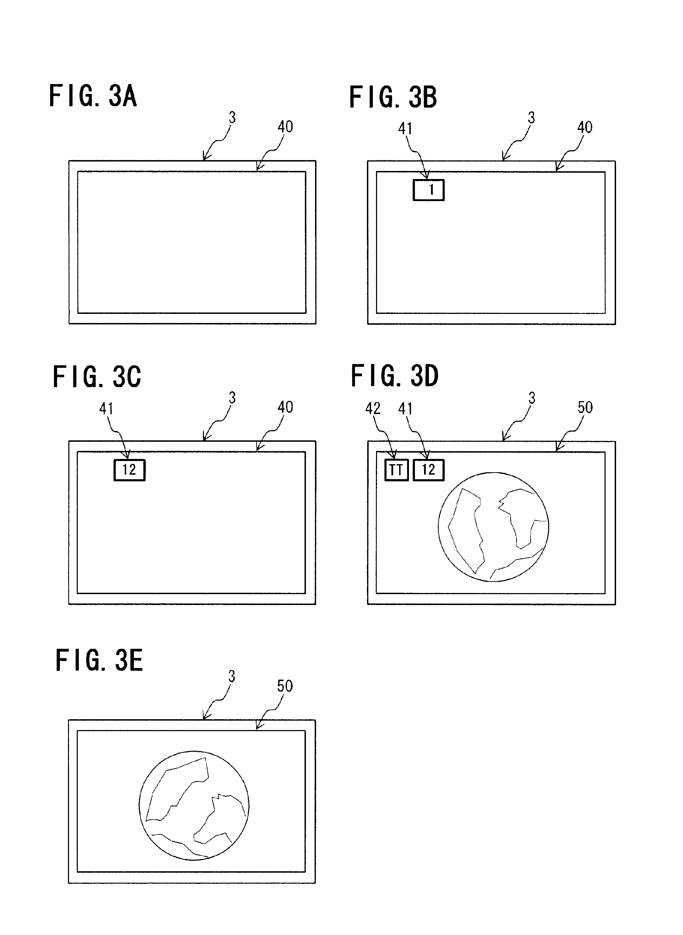

FIGS. 3A, 3B, 3C, 3D, and 3E show an example of GUI display at the time of the title search process (in the case where no content is being reproduced), i.e., an example of an image indicating how the remote control 11 has been operated by a user as well as an image indicating the type of a reproduction process started by the reproduction controller 14.

When no content is being reproduced, the GUI processor 15 displays on the screen of the display 3 a given initial image 40 (e.g., dark blue background image) as shown in FIG. 3A.

In this state, when a user has entered a number via the remote control 11, the GUI processor 15 displays an image 41, which indicates how the remote control 11 has been operated, on the initial image 40 as shown in FIGS. 3B and 3C.

More particularly, when a first digit has been entered via the remote control 11, the GUI processor 15 displays the entered first digit as the image 41 indicating how the remote control 11 has been operated as shown in FIG. 3B. In the example shown in FIG. 3B, "1" is entered as the first digit via the remote control 11, and the numeral "1" is displayed as the image 41 indicating how the remote control 11 has been operated.

Further, when a second digit has been entered via the remote control 11, the GUI processor 15 displays the entered first and second digits as the image 41 indicating how the remote control 11 has been operated as shown in FIG. 3C. In the example shown in FIG. 3C, "2" is entered as the second digit via the remote control 11, and the numeral "12" is displayed as the image 41 indicating how the remote control 11 has been operated.

Subsequently, when the user has confirmed the entry of the number via the remote control 11, the reproduction controller 14 starts the title search process (process for reproducing images in a title corresponding to the confirmed number) as a reproduction process.

When the title search process has been started by the reproduction controller 14, the GUI processor 15 exits the display of the initial image 40 and displays an image 42, which indicates the type of the reproduction process started by the reproduction controller 14, in addition to the image 41, which indicates how the remote control 11 has been operated, on an image 50 reproduced by the reproduction controller 14 as shown in FIG. 3D. In the example shown in FIG. 3D, a symbol indicating the start of the title search process is displayed as the image 42 indicating the type of the reproduction process.

Then, after a certain period of time has passed, the GUI processor 15 exits the display of the image 41, which indicates how the remote control 11 has been operated, and the display of the image 42, which indicates the type of the reproduction process, as shown in FIG. 3E.

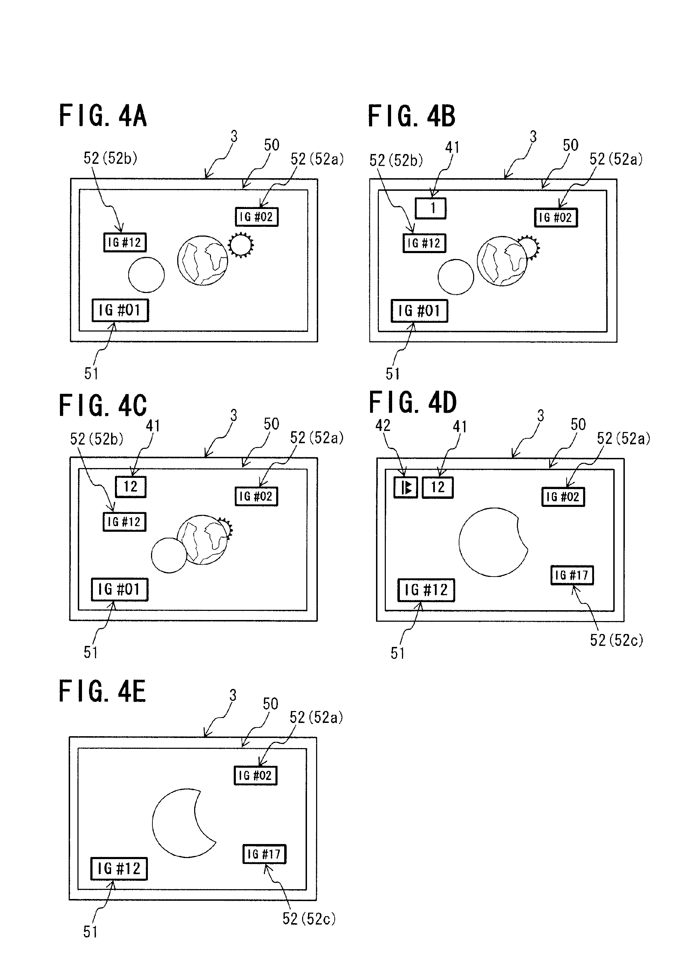

FIGS. 4A, 4B, 4C, 4D, and 4E show an example of GUI display at the time of the button selection search process (in the case where content is being reproduced and the content being reproduced is a "title with buttons" other than BD-J contents).

As shown in FIG. 4A, in the case where content is being reproduced and where the content being reproduced is a "title with buttons" other than BD-J contents, a reproduced image 50 in the "title with buttons", which is other than BD-J contents, is displayed on the display 3, and further an image 51 indicating the current section and images 52 indicating the sections of possible skip destinations (buttons for a user to select) are displayed as parts of the reproduced image 50. In the example shown in FIG. 4A, "IG #01" is shown in the image 51 indicating the current section. Further, two images 52a and 52b are displayed as the images 52 indicating the sections of skip destinations, wherein "IG #02" is shown in the image 52a and "IG #12" is shown in the image 52b.

In this state, when a user has entered a number via the remote control 11, the GUI processor 15 displays an image 41, which indicates how the remote control 11 has been operated, on the image 50 reproduced by the reproduction controller 14 as shown in FIGS. 4B and 4C.

More particularly, when a first digit has been entered via the remote control 11, the GUI processor 15 displays the entered first digit as the image 41 indicating how the remote control 11 has been operated as shown in FIG. 4B. In the example shown in FIG. 4B, "1" is entered as the first digit via the remote control 11, and the numeral "1" is displayed as the image 41 indicating how the remote control 11 has been operated.

Further, when a second digit has been entered via the remote control 11, the GUI processor 15 displays the entered first and second digits as the image 41 indicating how the remote control 11 has been operated as shown in FIG. 4C. In the example shown in FIG. 4C, "2" is entered as the second digit via the remote control 11, and the numeral "12" is displayed as the image 41 indicating how the remote control 11 has been operated.

Subsequently, when the user has confirmed the entry of the number via the remote control 11, the reproduction controller 14 starts the button selection search process as a reproduction process (process for skipping to a point corresponding to the confirmed number (image 52 indicating the section of skip destination selected by the user) so as to reproduce images from the point).

When the button selection search process has been started by the reproduction controller 14, the GUI processor 15 displays an image 42, which indicates the type of the reproduction process started by the reproduction controller 14, in addition to the image 41, which indicates how the remote control 11 has been operated, on the image 50 reproduced by the reproduction controller 14 after the start of the button selection search process (i.e., after the skipping) as shown in FIG. 4D. In the example shown in FIG. 4D, a symbol indicating the start of the button selection search process is displayed as the image 42 indicating the type of the reproduction process. Further, the image 51 indicating the current section and the images 52 (52a and 52c) indicating the sections of possible skip destinations are displayed as parts of the reproduced image 50 after the skipping. In the example shown in FIG. 4D, "IG #12" is shown in the image 51 indicating the current section, and "IG #02" and "IG #17" are shown in the images 52a and 52c indicating the sections of skip destinations, respectively.

Then, after a certain period of time has passed, the GUI processor 15 exits the display of the image 41, which indicates how the remote control 11 has been operated, and the display of the image 42, which indicates the type of the reproduction process, as shown in FIG. 4E.

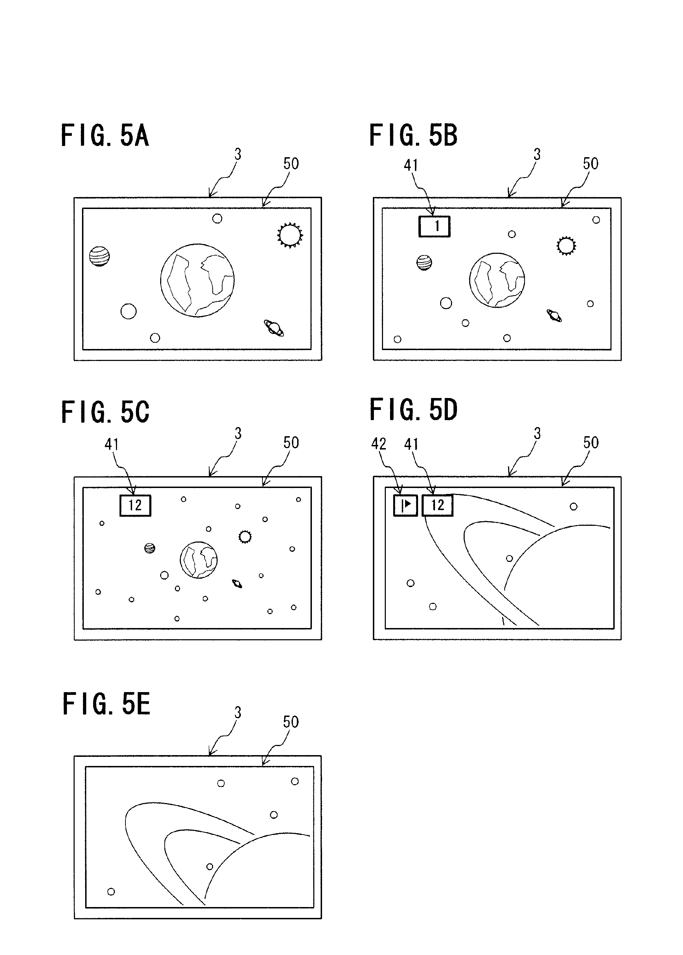

FIGS. 5A, 5B, 5C, 5D, and 5E show an example of GUI display at the time of the chapter search process (in the case where content is being reproduced and where the content being reproduced is a "title without buttons" other than BD-J content).

As shown in FIG. 5A, in the case where content is being reproduced and where the content being reproduced is a "title without buttons" other than BD-J content, a reproduced image 50 in the "title without buttons", which is other than BD-J content, is displayed on the display 3.

In this state, when a user has entered a number via the remote control 11, the GUI processor 15 displays an image 41, which indicates how the remote control 11 has been operated, on the image 50 reproduced by the reproduction controller 14, as shown in FIGS. 5B and 5C.

More particularly, when a first digit has been entered via the remote control 11, the GUI processor 15 displays the entered first digit as the image 41 indicating how the remote control 11 has been operated as shown in FIG. 5B. In the example shown in FIG. 5B, "1" is entered as the first digit via the remote control 11, and the numeral "1" is displayed as the image 41 indicating how the remote control 11 has been operated.

Further, when a second digit has been entered via the remote control 11, the GUI processor 15 displays the entered first and second digits as the image 41 indicating how the remote control 11 has been operated as shown in FIG. 5C. In the example shown in FIG. 5C, "2" is entered as the second digit via the remote control 11, and the numeral "12" is displayed as the image 41 indicating how the remote control 11 has been operated.

Subsequently, when the user has confirmed the entry of the number via the remote control 11, the reproduction controller 14 starts the chapter search process as a reproduction process (process for reproducing images in a chapter corresponding to the confirmed number).

When the chapter search process has been started by the reproduction controller 14, the GUI processor 15 displays an image 42, which indicates the type of the reproduction process started by the reproduction controller 14, in addition to the image 41, which indicates how the remote control 11 has been operated, on the image 50 reproduced by the reproduction controller 14 after the start of the chapter search process as shown in FIG. 5D. In the example shown in FIG. 5D, a symbol indicating the start of the chapter search process is displayed as the image 42 indicating the type of the reproduction process.

Then, after a certain period of time has passed, the GUI processor 15 exits the display of the image 41, which indicates how the remote control 11 has been operated, and the display of the image 42, which indicates the type of the reproduction process, as shown in FIG. 5E.

According to the optical disc apparatus 1 configured as described above, when a user has operated the remote control 11, an image 41 indicating the user operation is displayed, and when a reproduction process has been started in response to the user operation on the remote control 11, an image 42 indicating the type of the reproduction process is displayed. More particularly, regardless of differences in the types of optical discs 2 and the types of contents, an image 41 indicating how the remote control 11 has been operated by a user and an image 42 indicating the type of a reproduction process started in response to the user operation on the remote control 11 are displayed in a similar way to provide a common and unified GUI. Accordingly, this optical disc apparatus 1 can achieve a GUI that does not make a user feel uncomfortable and thus is user-friendly.

The present invention has been described above using a presently preferred embodiment, but those skilled in the art will appreciate that various modifications are possible. For example, an initial image to be displayed when no content is being reproduced may include a message image such as "Enter a number". An image indicating the type of a reproduction process may be a message image such as "○○ process has been executed". Further, when the button selection search process has been started, the display of the image button selection search process has been started, the display of the image indicating the type of the reproduction process may be skipped because a user can look at a change in the images indicating the sections of skip destinations to know the start of the button selection search process.

## Claims

1. Method for reproducing images recorded on an optical disk,
**characterized in that**
operation related images (41, 42) are displayed in conjunction with recorded content or no content-related images (40, 50) providing a feedback to the operator on the reproduction process initiated by the operator.

2. Method according to claim 1, wherein
in addition to a display of a recorded content related or no content-related image, a first image (41) indicating how a remote control (11) is being operated by a user and a second image (42) indicating the type of a reproduction process started in response to a user operation of an operation means, in particular a remote control (11), are displayed.

3. Method according to claim 2, wherein
the first and second images (41, 42) are displayed in a similar way so as to establish a common and unified graphical user interface (GUI).

4. Method according to one of the preceding claims 1 to 3, wherein
when a user has operated an operation means, a GUI processor displays a first image (41) indicating how the operation means (11) has been operated by the user in accordance with the operation signal output from the operation means (11) and, subsequently, when a reproduction control means (14) has started a reproduction process, a GUI processor (15) displays an image (42) indicating the type of the reproduction process started by the reproduction control means (14) in accordance with a process signal output from the reproduction control means (14).

5. Method according to claim 4,
wherein, while the GUI processor is displaying the image indicating the type of the reproduction process started by the reproduction control means, the GUI processor continues to display the image indicating how the operation means has been operated.

6. Method according to one of claims 4 or 5, wherein
when a user has entered a number via the operation means, the GUI processor displays the entered number as an image indicating how the operation means has been operated,
subsequently, when a user has confirmed the entry of the number via the operation means and when the reproduction control means has started a reproduction process corresponding to the confirmed number, the GUI processor displays an image indicating type of the reproduction process started by the reproduction control means.

7. Method according to one of the preceding claims 1 to 6, wherein
a reproduction control means (14) selectively executes a title search process, a button selection search process, and a chapter search process as reproduction processes.

8. Method according to claim 7, wherein
the title search process is processed for, when a user has entered a number and has confirmed the entry of the number via the operation means (11), reproducing images in a title corresponding to the confirmed number,
wherein the button selection search process is a process for, when a user has entered a number and has confirmed the entry of the number via the operation means (11), reproducing images based on the image data from a point corresponding to the confirmed number,
wherein the chapter search process is a process for, when a user has entered a number and has confirmed the entry of the number via the operation means (11), reproducing images in a chapter corresponding to the confirmed number.

9. Method according to one of the preceding claims 4 to 8, wherein
the reproduction control means selectively executes a title search process, a button selection search process, and a chapter search process as reproduction processes,
wherein the title search process is a process for, when a user has entered a number and has confirmed the entry of the number via the operation means, reproducing images in a title corresponding to the confirmed number, wherein the button selection search process is a process for, when a user has entered a number and has confirmed the entry of the number via the operation means, reproducing images based on the image data from a point corresponding to the confirmed number,
wherein the chapter search process is a process for, when a user has entered a number and has confirmed the entry of the number via the operation means, reproducing images in a chapter corresponding to the confirmed number, wherein, when the reproduction control means has started the title search process as an reproduction process, the GUI processor displays an image indicating that the title search process has been started as an image indicating type of the reproduction process started by the reproduction control means,
wherein, when the reproduction control means has started the button selection search process as an reproduction process, the GUI processor displays an image indicating that the button selection search process has been started as an image indicating type of the reproduction process started by the reproduction control means, and
wherein, when the reproduction control means has started the chapter search process as a reproduction process, the GUI processor displays an image indicating that the chapter search process has been started as an image indicating type of the reproduction process started by the reproduction control means.

10. An optical disc apparatus comprising:
operation means (11) that is operated by a user in order to instruct the optical disc apparatus to perform an operation and outputs an operation signal indicating how the operation means has been operated;
reproduction control means (14) that executes a reproduction process for images based on image data recorded on an optical disc in accordance with the operation signal output from the operation means and control data recorded on the optical disc and that, when the reproduction process has been started, outputs a process signal indicating type of the reproduction process; and
a GUI processor (15) that displays a first image (41) indicating how the operation means has been operated by a user and a second image (42) indicating the type of the reproduction process started by the reproduction control means (14) in accordance with the operation signal output from the operation means (11) and the process signal output from the reproduction control means (14).

11. Optical disc apparatus according to claim 10 comprising a remote control receiver (12) adapted to receive signals from an operation means, i.e. a remote control (11), a reproduction controller (14) as the reproduction control means, a GUI processor (15), and an OSD processor (16) which is adapted to communicate with a display (3) for displaying images based on image data recorded on an optical disc (2) and user operation related image data generated by a GUI processor (15) to display same as a graphical user interface (GUI).

12. Optical disc apparatus according to one of claims 10 or 11, wherein
- the reproduction controller (14) causes the optical disc drive (13) to read recorded data from an optical disc (2) to generate image signals to display images based on image data recorded on said optical disc (2) and outputting said image signals,
- the GUI processor (15) is adapted to generate image signals to display a graphical user interface (GUI) and outputs the image signals,
- the OSD processor (16) is adapted to perform a process of superimposing the image signals output from the GUI processor (15) on the image signals output from the reproduction controller (14) and to send the processed image signals to the display device.
